# EUROPEAN PATENT APPLICATION

(11) **EP 3 285 044 A1**
(43) Date of publication of application: **21.02.2018**
(21) Application number: 16779750.5
(22) Date of filing: 06.04.2016
(51) Int. Cl.: G01C 21/26, G08G 1/005, G09B 29/10

(54) **AZIMUTH IDENTIFICATION SYSTEM**

(30) Priority: 15.04.2015 JP 2015083316
(71) Applicant: DENSO CORPORATION, Kariya-city, Aichi 448-8661 (JP)
(72) Inventor: MATSUNAGA, Takayuki, Kariya-city Aichi 448-8661 (JP)
(74) Representative: Kuhnen & Wacker
(86) International application number: PCT/JP2016/001923
(87) International publication number: WO 2016/166953

(57) **Abstract**

The present disclosure provides an azimuth specifying system that can specify a relative azimuth of a terminal device which moves in a moving object without being affected by a traveling direction of the moving object. A server (14) delivers, to a terminal device (12), a moving object traveling direction which is a traveling direction of the moving object (11) relative to an absolute azimuth. A specifying unit calculates a difference between the delivered moving object traveling direction and a terminal device traveling direction which is a traveling direction of the terminal device (12) relative to the absolute azimuth. The specifying unit specifies, based on the calculated difference, a relative traveling direction of the terminal device (12) which is the traveling direction of the terminal device (12) relative to the traveling direction of the moving object (11).

## Description

### CROSS REFERENCE TO RELATED APPLICATION

This application is based on Japanese Patent Application No. 2015-83316 filed on April 15, 2015, the disclosure of which is incorporated herein by reference.

### TECHNICAL FIELD

The present disclosure relates to an azimuth specifying system, and more particularly, to an azimuth specifying system that specifies a traveling direction of a terminal device which moves inside a traveling moving object independently of the moving object.

### BACKGROUND ART

Up to now, a GPS (global positioning system) has been widely known as a positioning system for specifying a position and an azimuth. However, if there is an obstacle between a GPS satellite and a GPS receiver, such as specifying a position of an objection disposed indoors, a GPS signal cannot be received by the indoor object and accurate positioning is difficult. On the other hand, an IMES (indoor messaging system) has been proposed to enable indoor positioning. With the use of the IMES, the indoor positioning can be performed by simply changing the specifications of the GPS receiver to a small scale.

However, the IMES is intended for fixed objects such as buildings. For that reason, it is difficult to use the IMES when a transportation equipment such as a large-sized ship or an aircraft is the moving object. In other words, not only the position but also the traveling direction of the moving object such as the large-sized ship or the aircraft changes from moment to moment. For that reason, a discrepancy occurs in an absolute azimuth between the moving object and the terminal device that moves within the moving object, independently, which makes it difficult to guide position information based on the absolute azimuth.

### PRIOR ART LITERATURE

### PATENT LITERATURE

Patent Literature 1: JP 2012-21870A

### SUMMARY OF INVENTION

In view of the foregoing difficulties, it is an object of the present disclosure to provide an azimuth specifying system that specifies a relative azimuth of a terminal device which moves in a moving object without being affected by a traveling direction of the moving object.

According to an example of the present disclosure, in an azimuth specifying system, a delivery unit delivers, to a terminal device, an azimuth of a traveling direction of a moving object which is detected by a first detection unit, a specifying unit specifies an azimuth of a relative traveling direction of the terminal device based on an azimuth of a traveling direction of the moving object delivered from the delivery unit and an azimuth of a traveling direction of the terminal device detected by a second detection unit. The relative traveling direction of the terminal device is the traveling direction of the terminal device relative to the traveling direction of the moving object. As described above, the delivery unit delivers the azimuth of the traveling direction of the moving object which is detected by the first detection unit. The specifying unit specifies a difference between the delivered azimuth of the traveling direction of the moving object and the azimuth of the traveling direction of the terminal device, and specifies a relative azimuth based on the calculated difference. The relative azimuth is the azimuth of the traveling direction of the terminal device relative to the azimuth of the traveling direction of the moving object. With this configuration, the azimuth specifying system can specify the relative azimuth of the terminal device which moves in the moving object without being affected by the traveling direction of the moving object.

In the above azimuth specifying system, the map data storage unit may store map data which is created based on a map serving as the base of the inside map of the moving object. The map data of the map, which is stored in the map data storage unit and serves as the base of the inside map of the moving object, may be created based on a specific position of the moving object. For example, the map data stored in the map data storage unit may be created with a tip of the moving object in a traveling direction as "North" for convenience on the map. The guide unit may guide the terminal device to a destination on the map based on the azimuth of the traveling direction of the terminal device and the position of the terminal device specified by the internal position specifying unit with the use of the map created based on the specific position. In other words, even if there is a discrepancy between the "North" on the map displayed by the terminal device and the traveling direction relative to the absolute azimuth of the moving object, the discrepancy can be corrected by the azimuth of the relative traveling direction of the terminal device specified by the specifying unit. Therefore, even if the map data created based on the specific position of the moving object is used, the terminal device can be accurately guided to the destination.

### BRIEF DESCRIPTION OF DRAWINGS

The above and other objects, features and advantages of the present invention will become more apparent from the following detailed description made with reference to the accompanying drawings. In the drawings:
FIG. 1 is a schematic diagram illustrating a moving object to which an azimuth specifying system is applied according to an embodiment;
FIG. 2 is a block diagram illustrating a configuration of the azimuth specifying system according to the embodiment;
FIG. 3 is a schematic diagram illustrating a map image displayed on a display unit of a terminal device in the azimuth specifying system according to the embodiment;
FIG. 4 is a schematic diagram illustrating a flowchart of a traveling direction detection process of the azimuth specifying system according to the embodiment;
FIG. 5 is a schematic diagram illustrating a flowchart of a terminal azimuth specifying process of the azimuth specifying system according to the embodiment; and
FIG. 6 is a schematic diagram illustrating a flowchart of a guidance process of the azimuth specifying system according to the embodiment.

### EMBODIMENTS FOR CARRYING OUT INVENTION

Hereinafter, an azimuth specifying system according to an embodiment will be described with reference to the accompanying drawings.

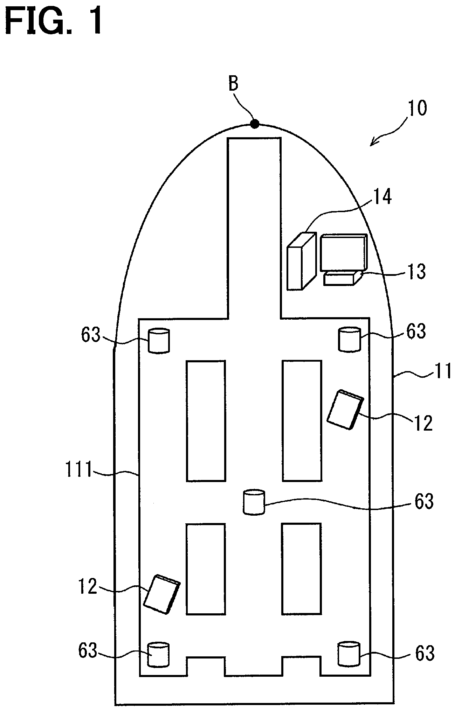

As illustrated in FIG. 1, an azimuth specifying system 10 according to an embodiment includes a moving object 11 and a terminal device 12. The moving object 11 is an object whose longitude and latitude change with time. In the embodiment, the moving object 11 is a large-sized ship. It should be noted that the moving object 11 is not limited to a ship but may be another transportation equipment such as an aircraft or a vehicle. Furthermore, the moving object 11 may be a building as long as the position changes with time as in a rotating observation platform or the like. The terminal device 12 moves in a passage 111 inside the moving object 11 independently of the moving object 11. In the embodiment, the terminal device 12 is, for example, a mobile terminal, and a user carries the terminal device 12 and moves inside the moving object 11 which is a ship. In the present specification, an absolute azimuth is, for example, an azimuth when the north on the earth, namely the North Pole point is set to "0°". In this case, a reference position of "0°" can be determined not only at the North Pole point but also a different point by adjusting the specification of the azimuth used by the azimuth specifying system 10.

The moving object 11 includes a traveling direction calculation device 13 and a server 14. The traveling direction calculation device 13 and the server 14 are provided in the moving object 11. The traveling direction calculation device 13 calculates data on the positions and azimuths of the moving object 11 and the terminal device 12. The server 14 delivers the data on the positions and azimuths of the moving object 11 and the terminal device 12 calculated by the traveling direction calculation device 13 to the terminal device 12. In other words, the server 14 corresponds to a delivery unit and delivery device. The traveling direction calculation device 13 and the server 14 may be configured as an integrated computer or may be configured as individual computers.

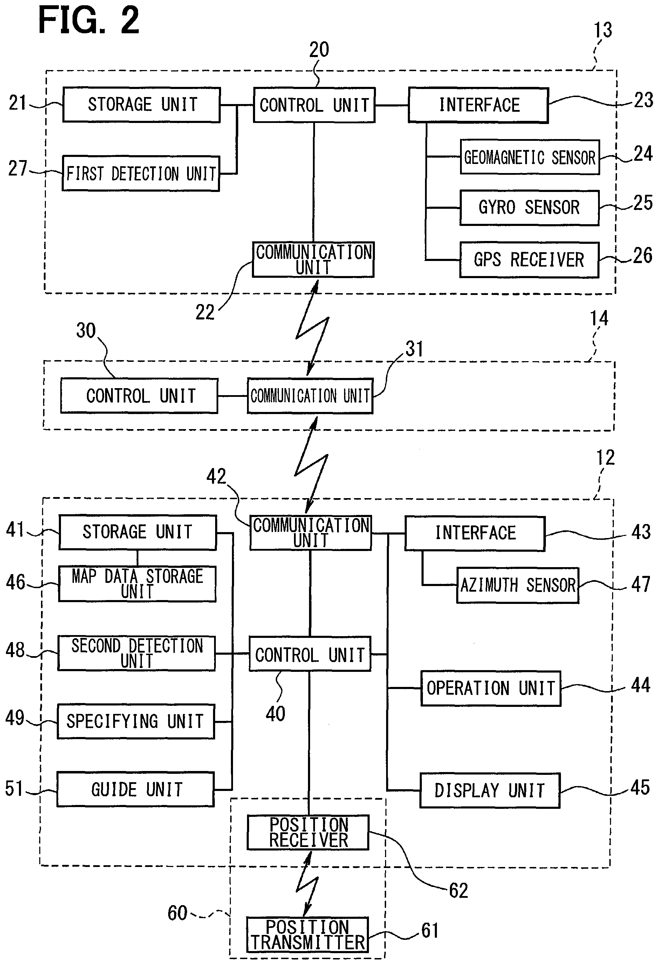

As illustrated in FIG. 2, the traveling direction calculation device 13 includes a control unit 20, a storage unit 21, a communication unit 22, and an interface 23. The control unit 20 is configured by a microcomputer having a CPU, a ROM, and a RAM. The storage unit 21 includes an optical and magnetic storage medium such as an HDD and a DVD, or a nonvolatile storage medium such as a flash memory. The storage unit 21 may be shared with the ROM and the RAM of the control unit 20. The communication unit 22 provides various data calculated by the traveling direction calculation device 13 to the server 14. The interface 23 is connected to various sensors and receivers. Specifically, the interface 23 is connected to a geomagnetic sensor 24, a gyro sensor 25, and a GPS receiver 26. The geomagnetic sensor 24 detects an azimuth of the moving object 11 based on the geomagnetism. The gyro sensor 25 detects an angle and angular velocity of the moving object 11. The GPS receiver 26 receives a GPS signal transmitted from a GPS satellite not shown. The geomagnetic sensor 24, the gyro sensor 25, and the GPS receiver 26 provide detection values and signals detected and received as electric signals to the control unit 20 through the interface 23. The traveling direction calculation device 13 operates as a first detection unit 27 in software manner by an execution of a computer program stored in the storage unit 21. The first detection unit 27 is not limited to software configuration but may be configured by hardware circuit or by combination of hardware circuit and software configuration. The first detection unit corresponds to a first detection device.

The server 14 includes a control unit 30 and a communication unit 31. The control unit 30 is configured by a microcomputer having a CPU, a ROM, and a RAM. The server 14 delivers the data on the position and azimuth calculated by the traveling direction calculation device 13 to the terminal device 12. In other words, the communication unit 31 of the server 14 receives various data from the traveling direction calculation device 13 and delivers the received data to the terminal device 12.

The terminal device 12 includes a control unit 40, a storage unit 41, a communication unit 42, an interface 43, an operation unit 44, and a display unit 45. The control unit 40 is configured by a microcomputer having a CPU, a ROM, and a RAM. The storage unit 41 has, for example, an optical and magnetic storage medium, a nonvolatile storage medium, or the like. The storage unit 41 may be shared with the ROM and the RAM of the control unit 40. The storage unit 41 also functions as a map data storage unit 46 that stores map data.

The communication unit 42 acquires various data calculated by the traveling direction calculation device 13 from the server 14. The interface 43 is connected to an azimuth sensor 47. The azimuth sensor 47 detects an absolute azimuth of the terminal device 12 which moves relative to the moving object 11. The azimuth sensor 47 provides the detected azimuth to the control unit 40 as an electric signal through the interface 43. The operation unit 44 has an input unit (input device) such as a button or a touch panel. The user inputs various operations using the operation unit 44 to the control unit 40 of the terminal device 12. The display unit 45 has a display panel (display device) such as a liquid crystal panel or an organic EL panel. The display unit 45 visibly displays various kinds of images created by the control unit 40, such as a map based on the map data.

The terminal device 12 operates as a second detection unit 48, a specifying unit 49, and a guide unit 51 in software manner by an execution of a computer program stored in the storage unit 41. The second detection unit 48, the specifying unit 49, and the guide unit 51 are not limited to the software configuration, but may be provided by hardware circuit or by combination of hardware circuit and software configuration. The second detection unit 48 corresponds to a second detection device. The specifying unit 49 corresponds to a specifying device. The guide unit 51 corresponds to a guide device.

The first detection unit 27 is provided in the traveling direction calculation device 13 as described above. The first detection unit 27 detects the azimuth of the moving object 11 in the traveling direction relative to the absolute azimuth as a moving object traveling direction a1 based on the detection values and signals acquired from the geomagnetic sensor 24, the gyro sensor 25, or the GPS receiver 26. The traveling direction calculation device 13 provides the moving object traveling direction a1 detected by the first detection unit 27 to the server 14. The server 14 delivers the moving object traveling direction a1 detected by the first detection unit 27 to the terminal device 12. A data communication is executed between the server 14 and the terminal device 12 through various wireless communications such as a wireless LAN and a short-range wireless communication.

The second detection unit 48 and the specifying unit 49 are provided in the terminal device 12 as described above. The second detection unit 48 detects the azimuth of the terminal device 12 in the traveling direction relative to the absolute azimuth according to the detection value acquired from the azimuth sensor 47 as a terminal traveling direction a2. The specifying unit 49 specifies the azimuth of the terminal device 12 in the traveling direction relative to the traveling direction of the moving object 11. Specifically, the specifying unit 49 acquires the moving object traveling direction a1 delivered from the server 14. Further, the specifying unit 49 acquires the terminal traveling direction a2 from the second detection unit 48. The specifying unit 49 then specifies the azimuth of the terminal device 12 in the traveling direction relative to the traveling direction of the moving object 11 according to the obtained moving object traveling direction a1 and the obtained terminal traveling direction a2. More specifically, the specifying unit 49 calculates a difference between the moving object traveling direction a1 and the terminal traveling direction a2 as a difference A. When the difference A is positive, that is, 0 ≤ A, the specifying unit 49 sets the calculated difference A as a terminal relative traveling direction which indicates the azimuth of the traveling direction of the terminal device 12 relative to the t raveling direction of the moving object 11. On the other hand, when the difference A is negative, that is, A < 0, the specifying unit 49 sets a value obtained by adding 360° to the calculated difference A as the terminal relative traveling direction.

The azimuth specifying system 10 includes an internal position specifying unit 60. The internal position specifying unit 60 specifies a position of the terminal device 12 within the moving object 11. Specifically, the internal position specifying unit 60 includes position transmitters 61 and a position receiver 62. The position transmitters 61 are provided in the moving object 11. In the case of the present embodiment, as illustrated in FIG. 1, multiple position transmitters 61 are provided as access points 63 at various places inside the moving object 11. Each of the position transmitters 61 transmits a signal for specifying a position of the terminal device 12 inside the moving object 11. The position receiver 62 receives the signal transmitted from each position transmitter 61. In the case of the present embodiment, the position receiver 62 is provided in the terminal device 12 as illustrated in FIG. 2. The terminal device 12 acquires its own position inside the moving object 11 by receiving the signal output from the position transmitter 61 using the position receiver 62. As the internal position specifying unit 60, for example, a WiFi network communication system built in the moving object 11, a position specifying beacon, or the like can be used. Further, when the terminal device 12 is positioned outdoors such as a deck of a ship, the internal position specifying unit 60 may specify the position of the terminal device 12 inside the moving object 11 with the use of a GPS signal. The internal position specifying unit 60 may share a communication system such as WiFi used for communication between the server 14 and the terminal device 12. The internal position specifying unit 60 corresponds to an internal position specifying device.

The storage unit 41 provided in the terminal device 12 also functions as the map data storage unit 46 that stores the map data. The map data is data which provides base of the map showing the inside of the moving object 11 with a specific position of the moving object 11 as a reference point. In the case of the present embodiment, as illustrated in FIG. 1, the map of the moving object 11 is created with a tip of the moving object 11 in the forward direction as a reference point B. For example, in the case of a ship, the map may be created with a bow as the reference point B, and in the case of an aircraft, the map may be created with a nose as the reference point B. The map data storage unit 46 stores the map data which provides the base of the map and is created with reference to the reference point B. A visible map created on the basis of this map data is displayed as a map image on the display unit 45 of the terminal device 12. At this time, the map displayed on the display unit 45 is displayed with the reference point B as the azimuth "0". In other words, the map is displayed so that the reference point B is on an upper side on the display screen.

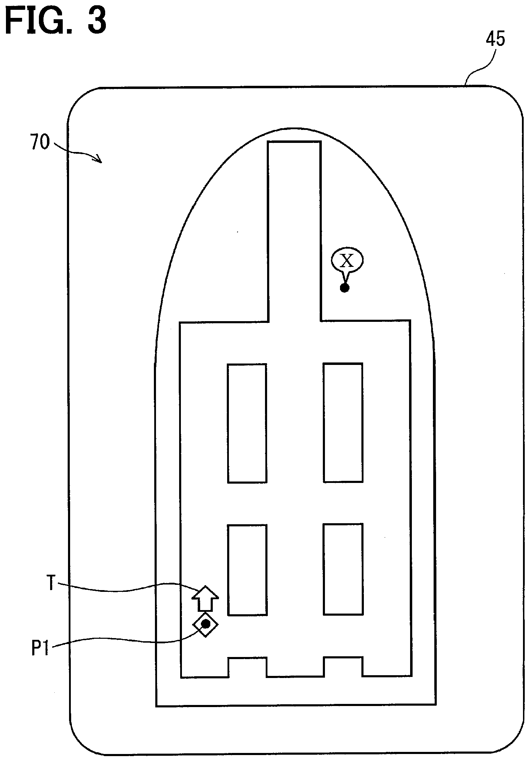

The guide unit 51 is provided in the terminal device 12 as described above. With the use of the map displayed on the display unit 45, the guide unit 51 guides the user who carries the terminal device 12 to a destination. Specifically, the guide unit 51 acquires the terminal relative traveling direction specified by the specifying unit 49 and the position of the terminal device 12 specified by the internal position specifying unit 60. With the use of the acquired terminal relative traveling direction and the terminal position, as illustrated in FIG. 3, the guide unit 51 displays a current position P1 of the terminal device 12 and a current traveling direction T of the terminal device 12 on a map image 70 displayed on the display unit 45 in a superimposed manner. The traveling direction T coincides with the terminal relative traveling direction specified by the specifying unit 49. Further, the guide unit 51 leverages the traveling direction T superimposed on the map image 70 to guide the terminal device 12 from the current position P1 of the terminal device 12 to a destination X superimposed on the map image 70. In other words, the user who carries the terminal device 12 is guided to the destination X inside the moving object 11 superimposed on the map image 70 while viewing the map image 70 displayed on the display unit 45 of the terminal device 12 as well as the current position P1 and the traveling direction T superimposed on the map image 70. In this case, the guide unit 51 may guide the user by displaying the visible map image 70 on the display unit or may guide the user by outputting a guidance voice in audio manner or the like.

Next, a flowchart of a process executed by the operation of the azimuth specifying system 10 configured as described above will be described.

### (Traveling Direction Detection Process)

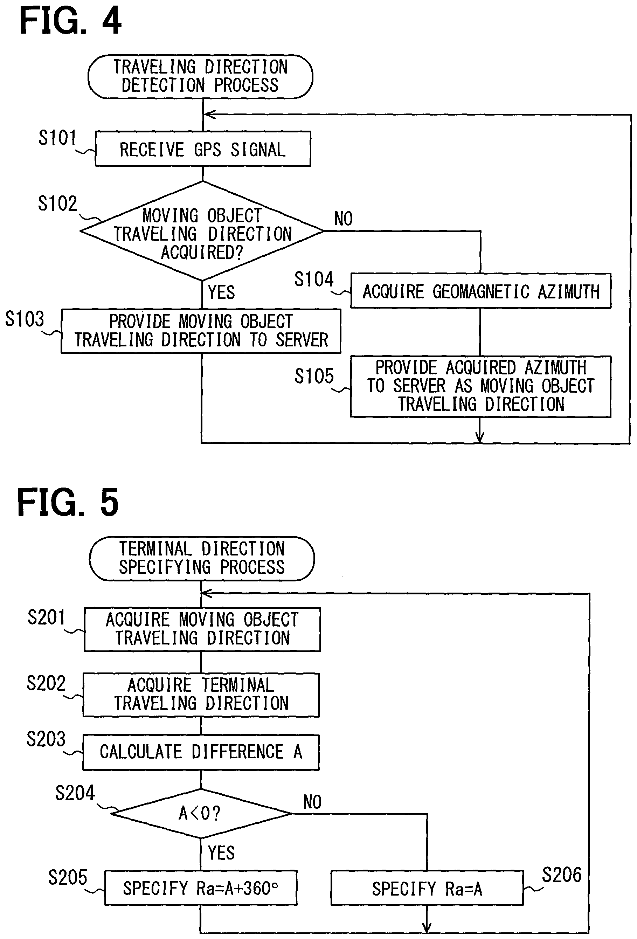

A traveling direction detection process will be described with reference to FIG. 4. FIG. 4 illustrates an example of a detection algorithm for detecting the traveling direction of the moving object 11. The detection algorithm may be set in a different manner.

Upon starting the process, the first detection unit 27 receives the GPS signal (S101). The first detection unit 27 receives the GPS signal transmitted from the GPS satellite, which is not shown, using the GPS receiver 26. The first detection unit 27 determines whether the moving object traveling direction a1 can be detected from the received GPS signal, or not (S102). The GPS receiver 26 receives the GPS signal from the GPS satellite. Thus, in some cases, the GPS receiver 26 may fail to detect the GPS signal and the moving object traveling direction a1 based on the GPS signal depending on a state of the atmosphere, such as weather. For that reason, the first detection unit 27 determines whether the moving object traveling direction a1 can be detected based on the GPS signal, or not.

When the first detection unit 27 determines that the moving object traveling direction a1 is detected (yes in S102), the first detection unit 27 provides the detected moving object traveling direction a1 to the server 14 (S103). At this time, the moving object traveling direction a1 detected by the first detection unit 27 and provided to the server 14 is based on an absolute azimuth. On the other hand, when the first detection unit 27 determines that the moving object traveling direction a1 cannot be detected (no in S102), the first detection unit 27 acquires the azimuth derived based on the geomagnetism (S104). In other words, the first detection unit 27 acquires, from the geomagnetic sensor 24, the azimuth which is based on the geomagnetism. The geomagnetism has a declination relative to a reference point of the absolute azimuth. For that reason, the first detection unit 27 or the geomagnetic sensor 24 corrects the geomagnetic declination. Upon acquiring the azimuth derived based on the geomagnetism, the first detection unit 27 provides the acquired azimuth to the server 14 as the moving object traveling direction a1 (S105). Similarly, in this case, the moving object traveling direction a1 provided by the first detection unit 27 to the server 14 is based on the absolute azimuth.

When the first detection unit provides the moving object traveling direction a1 derived from the GPS signal in S103 to the server 14 or provides the moving object traveling direction a1 derived based on the geomagnetism in S104 to the server 14, the process returns to S101, and the processes subsequent to S101 are repeated. The server 14 delivers the moving object traveling direction a1 provided from the traveling direction calculation device 13 to the terminal device 12 which exists inside the moving object 11.

In the example illustrated in FIG. 4, when the moving object traveling direction a1 cannot be specified based on the GPS signal, the moving object traveling direction a1 is detected with the use of the geomagnetism detected by the geomagnetic sensor 24. Alternatively, the moving object traveling direction a1 may be acquired with the use of the output of the gyro sensor 25, or the outputs of the gyro sensor 25 and the geomagnetic sensor 24.

### (Terminal Azimuth Specifying process)

Next, a terminal azimuth specifying process executed by the specifying unit 49 will be described with reference to FIG. 5.

The specifying unit 49 acquires the moving object traveling direction a1 from the server 14 (S201). The specifying unit 49 acquires the moving object traveling direction a1 from the server 14 through a communication between the communication unit 42 and the server 14. In this case, the communication between the communication unit 42 and the server 14 may be performed by a wireless communication or a wired communication. The specifying unit 49 acquires the terminal traveling direction a2 which is the traveling direction of the terminal device 12 (S202). More specifically, the specifying unit 49 acquires the terminal traveling direction a2 from the second detection unit 48. The second detection unit 48 acquires the terminal traveling direction a2, which is the absolute azimuth, from the azimuth sensor 47. The azimuth sensor 47 detects the azimuth, for example, based on the geomagnetism. The second detection unit 48 acquires the absolute azimuth in the terminal traveling direction a2 from the azimuth sensor 47.

The specifying unit 49 calculates the difference A between the obtained moving object traveling direction a1 and the terminal traveling direction a2 (S203). In other words, the specifying unit 49 calculates the difference A as A = a2 - a1 according to the moving object traveling direction a1 acquired from the server 14 through the communication unit 42 and the terminal traveling direction a2 acquired from the second detection unit 48. The second detection unit 48 acquires azimuth of the terminal traveling direction a2 from the azimuth sensor 47.

The specifying unit 49 determines whether the difference A calculated in S203 is negative, that is, A <0, or not (S204). When the specifying unit 49 determines that the difference A is negative, that is, A <0 (yes in S204), the specifying unit 49 specifies a value obtained by adding 360° to the difference A calculated in S203 as a relative traveling direction Ra of the terminal device 12 (S205). In other words, the specifying unit 49 specifies Ra = A + 360° as the relative traveling direction Ra of the terminal device 12. On the other hand, when the specifying unit 49 determines that the difference A is positive, that is, 0 ≤ A (no in S204), the specifying unit 49 specifies a value of the difference A calculated in S203 as the relative traveling direction Ra of the terminal device 12 as it is (S206). In other words, the specifying unit 49 specifies Ra = A as the relative traveling direction Ra of the terminal device 12.

When the specifying unit 49 specifies the relative traveling direction Ra of the terminal device in S205 and S206, the specifying unit returns to S201 and repeats the processes subsequent to S201.

### (Guidance Process)

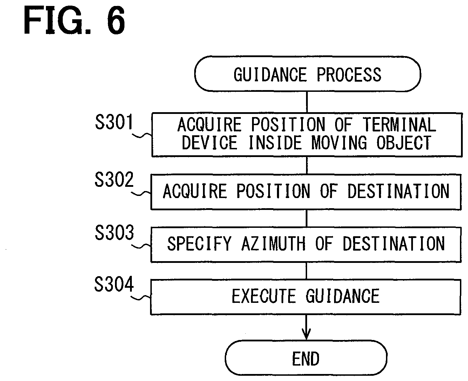

A guidance process by the guide unit 51 will be described with reference to FIG. 6.

The user operates the operation unit 44 of the terminal device 12 to set the destination X existing inside the moving object 11. Further, the terminal device 12 displays the map image 70 based on the map data stored in the map data storage unit 46 on the display unit 45. The terminal device 12 displays the current position P1, the traveling direction T of the terminal device 12, and the destination X on the map image 70 displayed on the display unit 45 in a superimposed manner.

When the guidance process is started, the guide unit 51 acquires the position of the terminal device 12 inside the moving object 11 (S301). Specifically, the guide unit 51 acquires the position specified by the internal position specifying unit 60. The internal position specifying unit 60 specifies the position of the terminal device 12 in the moving object 11, for example, with the use of WiFi, a beacon or the like built in the moving object 11. The guide unit 51 acquires the specified position from the internal position specifying unit 60. Next, the guide unit 51 acquires the position of the destination X (S302). That is, the guide unit 51 acquires the position of the destination X set by the user's input operation on the operation unit 44, that is, the position of the destination X inside the moving object 11. The position of the destination X is stored as destination data, for example, in the storage unit 41. The guide unit 51 acquires the destination data from the storage unit 41. In this example, the position of the set destination X is subjected to coordinate transformation with reference to the reference point B of the moving object 11. For example, in the case of a ship, a bow is set as the reference point B. That is, the direction pointed by the bow corresponds to "0°" in the map image 70 displayed on the display unit 45.

The guide unit 51 specifies the azimuth of the destination X (S303). In other words, the guide unit 51 specifies the azimuth of the destination X relative to the current position P1 of the terminal device 12 according to a relationship between the current position P1 of the terminal device 12 and the destination X. In this case, in the case of a ship as described above, the bow is set to "0°" as the reference point B. Therefore, the guide unit 51 specifies the azimuth of the destination X when the reference point B is set to "0°".

Upon specifying the azimuth of the destination X in S303, the guide unit 51 executes the guidance (S304). Specifically, the guide unit 51 acquires the relative traveling direction Ra of the terminal device 12 specified by the terminal azimuth specifying process from the specifying unit 49. With the use of the traveling direction Ra and the azimuth of the destination X specified in S303, the guide unit 51 indicates the direction toward which the user who carries the terminal device 12 should travel. In this case, the guide unit 51 may be configured to guide the user of the terminal device 12 in consideration of the shape of the passage 111 inside the moving object 11. As described above, with the use of the traveling direction Ra of the terminal device 12 relative to the moving object 11, the guide unit 51 can guide the user who carries the terminal device 12 to the destination X by using the azimuth when the reference point B of the moving object 11 is set to "0°" even in a case where the traveling direction of the moving object 11 changes over time.

In the embodiment described above, the server 14 delivers the moving object traveling direction a1 detected by the first detection unit 27 to the terminal device 12. The specifying unit 49 specifies the relative traveling direction Ra of the terminal device 12 which is relative to the traveling direction of the moving object 11 according to the received moving object traveling direction a1 and the terminal traveling direction a2 detected by the second detection unit 48. Specifically, the server 14 delivers the azimuth of the moving object 11 in the traveling direction detected by the first detection unit 27 as the moving object traveling direction a1. The specifying unit 49 calculates the difference A according to the delivered moving object traveling direction a1 and the terminal traveling direction a2, and specifies the relative azimuth with the use of the calculated difference A, that is, the relative traveling direction Ra of the terminal device 12 to the traveling direction of the moving object 11. Therefore, the specifying unit 49 can specify the relative azimuth of the terminal device 12 inside the moving object 11 without being affected by the traveling direction of the moving object 11.

Further, according to the embodiment, the map data storage unit 46 stores the map data providing the base of the inside map of the moving object 11. The map serving as the base of the map data stored in the map data storage unit 46 may be created with reference to a reference point B that is a specific position of the moving object 11. The guide unit 51 guides the terminal device 12 to the destination X on the map based on the terminal traveling direction a2 and the position of the terminal device 12. The position of the terminal device 12 is specified by the internal position specifying unit 60 with the use of the map created with reference to the reference point B. In other words, even if there is a discrepancy between "0°" on the map image 70 displayed by the terminal device 12 and the traveling direction relative to the absolute azimuth of the moving object 11, the discrepancy is corrected by the relative traveling direction Ra of the terminal device 12 specified by the specifying unit 49. Therefore, even if the map data created based on the reference point B of the moving object 11 is used, the terminal device 12 can be accurately guided to the destination X.

Although the embodiment has been described above, the technical idea of the present disclosure can be realized and applied to various other embodiments.

For example, in the embodiment described above, the terminal device 12 includes the specifying unit 49 and the guide unit 51. Alternatively, the specifying unit 49 and the guide unit 51 may be provided not in the terminal device 12 but provided in the traveling direction calculation device 13 or provided in the server 14. In this case, the terminal device 12 transmits the terminal traveling direction a2 detected by the second detection unit 48 to the traveling direction calculation device 13 or the server 14. The traveling direction calculation device 13 or the server 14 which has received the terminal traveling direction a2 from the terminal device 12, specifies the difference A and the relative traveling direction Ra in the specifying unit 49 provided in those components, and creates the guide information to be guided by the guide unit 51 with the use of the specified traveling direction Ra. Then, the traveling direction calculation device 13 or the server 14 transmits the created guide information to the terminal device 12. Similarly, one of the specifying unit 49 and the guide unit 51 may be provided in the terminal device 12, and the other one may be provided in the traveling direction calculation device 13 or the server 14. In this manner, the specifying unit 49 and the guide unit 51 can be provided in a device according to a processing capability of each device.

## Claims

1. An azimuth specifying system (10), which comprises a traveling moving object (11) and a terminal device (12) moving inside the moving object (11) independently of the moving object (11), the azimuth specifying system comprising:
a first detection unit (27) that detects an azimuth of a traveling direction of the moving object (11) relative to an absolute azimuth;
a delivery unit (14) that delivers, to the terminal device (12), the azimuth of the traveling direction of the moving object (11) which is detected by the first detection unit (27);
a second detection unit (48) that detects an azimuth of a traveling direction of the terminal device (12) relative to the absolute azimuth; and
a specifying unit (49) that specifies an azimuth of a relative traveling direction of the terminal device (12) based on the azimuth of the traveling direction of the moving object (11) delivered from the delivery unit (14) and the azimuth of the traveling direction of the terminal device (12) detected by the second detection unit (48), wherein the relative traveling direction of the terminal device (12) is the traveling direction of the terminal device (12) relative to the traveling direction of the moving object (11).

2. The azimuth specifying system according to claim 1, further comprising:
an internal position specifying unit (60) that specifies a position of the terminal device (12) existing inside the moving object (11);
a storage unit (46) that stores data indicating a map of the moving object (11) as map data, wherein the map of the moving object is created with a specific position of the moving object (11) as a reference point; and
a guide unit (51) that guides the terminal device (12) to a destination on the map based on the map data stored in the storage unit (46), the azimuth of the relative traveling direction of the terminal device (12) specified by the specifying unit (49), and the position of the terminal device (12) specified by the internal position specifying unit (60).

3. The azimuth specifying system according to claim 1 or 2, wherein
the specifying unit (49) calculates a difference between the azimuth of the traveling direction of the moving object (11) relative to the absolute azimuth and the azimuth of the traveling direction of the terminal device (12) relative to the absolute azimuth as a difference A,
when the difference A is positive (0 ≤ A), the specifying unit (49) sets the difference A as the azimuth of the relative traveling direction of the terminal device (12), and
when the difference A is negative (A < 0), the specifying unit (49) sets a value obtained by adding 360° to the difference A as the azimuth of the relative traveling direction of the terminal device (12).
